# EUROPEAN PATENT SPECIFICATION

(11) **EP 2 006 556 B1**
(45) Date of publication and mention of the grant of the patent: **13.11.2013**
(21) Application number: 07405175.6
(22) Date of filing: 18.06.2007
(51) Int. Cl.: F16C 32/04

(54) **Recovery of impact in a magnetic bearing device**
Stabilisierung einer Magnetlagervorrichtung bei Fanglagerkontakt
Récupération d'impact dans un dispositif de roulement magnétique

(43) Date of publication of application: 24.12.2008
(73) Proprietor: Mecos Traxler AG, 8404 Winterthur (CH)
(72) Inventor: Larsonneur, René, 8404 Winterthur (CH); Bühler, Philipp, 8005 Zürich (CH)
(74) Representative: Detken, Andreas

(56) References cited:
- EP-A- 0 313 727
- EP-A- 0 819 860
- EP-A- 0 819 861
- EP-A- 1 498 625
- EP-A- 1 621 785
- US-A- 5 576 587
- US-A- 5 747 907
- US-A- 6 147 425
- US-B1- 6 515 387

## Description

### Field of the invention

The present invention relates to a control device for a magnetic bearing device, to a magnetic bearing device equipped with such a control device, to a method of controlling a magnetic bearing device, and to a computer program product implementing such a method.

### Background of the invention

In a magnetic bearing device, an object is supported by magnetic forces in a contact-less manner. One or more degrees of freedom of the object may be controlled actively by active magnetic bearings. To this end, information about the actual position of the object to be supported is determined and compared to a desired position. This position information is fed to a controller which controls, via a power amplifier, one or more electromagnetic actuators in the magnetic bearings. In this manner, stable levitation of the object may be achieved.

In many applications, e.g. in turbo machinery, tool spindles, centrifuges, fly wheels or pumps such as turbo-molecular pumps, the object is a rotor supported for rapid rotation about a rotation axis. In order to support the rotor when the active magnetic bearings are powered off or in situations when the magnetic bearings alone are not able to support the rotor, e.g., due to excessive forces acting on the rotor, usually a set of touchdown bearings, often also called backup bearings or emergency bearings, is provided. These touchdown bearings are usually ball bearings.

A situation in which the rotor, while rotating rapidly, happens to touch the touchdown bearings is called a "touchdown". Such a touchdown may occur, e.g., if the magnetic bearing device or the rotor supported by the device receives a strong, brief impact by some other object, or in case of a short-term overload or power failure. In a touchdown situation it is extremely difficult to lift the rotor again away from the touchdown bearings in order to return to contactless magnetic levitation. In order to enable lift-off after such an impact, it has been suggested in the art to reduce the rotation frequency of the rotor to a point at which lift-off can be achieved again. In some prior-art schemes rotation of the rotor is even stopped completely after a touchdown, and the whole system is restarted from standstill. By the way of example, in EP-A 1 596 080, it has been proposed to pull the rotor to one side by means of the magnetic bearings in case of a touchdown to prevent excessive oscillations, and the rotor is not levitated again before rotation has stopped.

In order to avoid excessive oscillations of the rotor in the magnetic bearing at start-up of the device from standstill, it has been proposed in JP-A 04-285314 to provide separate control circuits for lift-off and for normal operation. Essentially the control circuit used for lift-off has a smaller gain than the control circuit used for normal operation. Control is switched from one to the other of the two control circuits once lift-off has been achieved. This device, however, is completely unsuitable to address the problems occurring after a touchdown while the rotor is rotating rapidly.

Another means to prevent excessive oscillations known from literature are mechanical damping elements added to the touchdown bearings. Such elements are disclosed, e.g., in EP-A 0 994 265. However, these damping elements introduce some additional undesired compliance of the touchdown bearings and increase system cost.

EP 1 621 785 discloses a control device having the features of the pre-characterizing portion of claim 1. In particular, this document discloses a control device having a separate controller module that is specifically adapted to control a forward whirling motion in a touchdown situation. This controller module is weighted by the frequency of the whirling motion by being narrow-banded around the rotation frequency. It can be provided in parallel to other controller modules.

### Summary of the invention

It is an object of the present invention to provide a device for controlling a magnetic bearing device that allows for improved recovery from a touchdown situation while the rotor continues to rotate.

This object is achieved by a control device according to claim 1.

It is a further object of the present invention to provide a corresponding method of controlling a magnetic bearing device.

This object is achieved by a method according to claim 12.

According to further aspects of the invention, a magnetic bearing device comprising a control device according to the present invention and a computer program product implementing a method according to the present invention are provided.

Preferred embodiments of the invention are laid down in the dependent claims.

The present invention provides a control device for controlling the position of a rotor in a magnetic bearing device. The magnetic bearing device comprises one or more active magnetic bearings for magnetically supporting the rotor for rotation about a rotation axis in a contact-less manner (i.e., for magnetically levitating the rotor) and one or more touchdown bearings for supporting said rotor when said magnetic bearings are unable to support the rotor. The control device is adapted to receive rotor position signals (either from sensors or from a determination of rotor position from other variables) and to provide bearing control signals for controlling the magnetic bearings. The control device comprises:
a first controller module specifically adapted to control the rotor, in particular, its position in a standard situation in which said rotor rotates while it levitates, i.e., it is not touching said touchdown bearings;
a second controller module specifically adapted to control the rotor for recovery from a touchdown situation in which said rotor rotates while touching at least one of said touchdown bearings, i.e., the second controller module is specifically adapted to influence the rotor in a manner to allow the first controller module to re-achieve stable control after a touchdown; and
a weighting module for determining at least one weighting factor, said weighting factor being an indicator for a touchdown situation, and for combining output signals of said first and second controller modules in a weighted manner according to said weighting factor.

In other words, a second controller module is provided for impact recovery after a touchdown. This second controller module takes the specific type of rotor dynamics occurring in a touchdown situation into account. This is not possible with standard controllers, as such standard controllers are adapted to control the rotor in a situation in which its dynamical properties are fundamentally different than in a touchdown situation, and generally deliver signals that are inappropriate and/or too weak for impact recovery. The output signals of the first (basic) controller module and the second (impact recovery) controller module are weighted with a weighting factor that indicates the occurrence of a touchdown and thus allows to discriminate between standard levitation and a touchdown.

A corresponding method comprises the following steps:
receiving rotor position signals representing a momentary position of the rotor;
based on the rotor position signals, determining first bearing control signals specifically adapted to control the rotor, in particular, its position, in a standard situation in which the rotor levitates, i.e., rotates while not touching the touchdown bearings, and determining second bearing control signals specifically adapted to control the rotor for recovery from a touchdown situation in which the rotor rotates while touching at least one of said touchdown bearings, i.e., the second bearing control signals are specifically adapted to influence the rotor in a manner to allow the first bearing control signals to re-achieve stable control after a touchdown;
determining a weighting factor, the weighting factor being an indicator of a touchdown situation;
combining the first and second bearing control signals in a weighted manner (i.e., determining a weighted sum of these signals) according to the weighting factor to provide weighted bearing control signals;
using the weighted bearing control signals for controlling the magnetic bearings.

A characteristic type or mode of motion typically adopted by a rotor after a touchdown is a whirling motion - or, briefly, whirl - of the rotor in the touchdown bearings. The second controller module and the second bearing control signals provided by that module are in accordance with the invention specifically adapted to damp and eventually stop such a whirling motion. Correspondingly, also the weighting factor is an indicator or measure of a specific, predetermined mode of rotor dynamics (type of momentary motion of the rotor) that is characteristic of such a touchdown situation. In accordance with the invention the weighting factor is a measure for the amount of whirling motion of the rotor and is calculated from a momentary rotor position and from a temporal change of said momentary rotor position.

A good measure of the amount and direction of whirl is the vector cross product of a local center-of-mass position vector and a local center-of-mass velocity vector of a rotor portion at or near the touchdown bearings. In a preferred embodiment, the weighting module is therefore adapted to calculate the weighting factor from such a vector cross product. In particular, the weighting factor may be the - appropriately scaled and possibly cut-off - magnitude (Euclidean norm) of the cross product or a function of this quantity such as its square. The weighting module may further be adapted to determine the direction of the whirl (forward or backward) from the cross product and to transmit this information to the second (impact recovery) controller module.

While the weighting factor may be a binary value (e.g., take only one of the values 0 or 1), the weighting factor is preferably a substantially continuous variable such that the weighting unit is operable to achieve a substantially continuous crossover between the first and second controller modules. "Substantially continuous" means that the weighting factor can take at least 8 values (3 bit resolution), preferably at least 256 values (8 bit resolution). In a preferred embodiment, the weighting factor takes a value of zero if the magnitude of the cross product is smaller than a predetermined threshold, such that in such a situation only the first controller module is active. The weighting factor may take a value of one if the magnitude exceeds a predetermined maximum, such that in such a situation only the second controller module is active. Between the threshold and maximum values, the weighting factor may then rise from zero to one, e.g., in a linear or square manner.

In order to avoid spurious changes in control characteristics, the weighting module preferably comprises a low-pass filter for the weighting factor, i.e., the weighting factor is subjected to low-pass filtering before weighting the first and second bearing control signals.

In a preferred embodiment, the rotor position signals are received by the control device as signals in a predetermined coordinate system (the "sensor" coordinate system) and are transformed into transformed rotor position signals reflecting the rotor position in a local coordinate system of the touchdown bearings. To this end, the control device preferably comprises a first transformation module adapted to receive the rotor position signals in the predetermined coordinate system and to provide the transformed rotor position signals. The second control module is then operatively connected to said first transformation module for receiving the transformed rotor position signals, causing the transformed rotor position signals to be used for determining the second bearing control signals.

The second bearing control signals are preferably determined in the local coordinate system of the touchdown bearings and are then transformed into a local coordinate system of the active magnetic bearings before being subjected to weighting. To this end, the control device preferably comprises a second transformation module adapted to receive the bearing control signals from the second control module and to provide the transformed bearing control signals.

In order to improve stability of control, the position signals are preferably compensated for rotor unbalance by removing or compensating for signal components arising from rotor unbalance before being used for determining the second bearing control signals. To this end, the control device preferably comprises an unbalance compensation module adapted to receive input position signals that are yet uncompensated for unbalance, and to provide compensated position signals. At least the second controller module is then preferably operatively connected to the unbalance compensation module to receive the compensated position signals or signals based on the compensated position signals as its input signals.

Preferably, the unbalance compensation module is adaptive, i.e., the unbalance compensation module dynamically determines unbalance compensation signals that are subtracted from the uncompensated sensor signals, wherein the compensation signals depend on the presence and magnitude of signal components in the uncompensated sensor signals which indicate the presence of unbalance. An example for such an adaptive, feedforward unbalance compensation scheme, which may be viewed as a generalized notch filter optimized for closed-loop stability, is given in Herzog R., Bühler P., Gähler C. and R. Larsonneur: "Unbalance Compensation Using Generalized Notch Filters in the Multivariable Feedback of Magnetic Bearings", IEEE Transactions on Control Systems Technology, Vol. 4, No.5, September 1996, pp. 580-586. In such a scheme, it is preferable to interrupt the self-adaptation (convergence) process of the unbalance compensation if a touchdown situation occurs, thus causing the unbalance compensation module to continue to run with those parameters that were active at the time the touchdown occurred, until stable levitation is again achieved.

The present invention also provides a magnetic bearing device comprising
one or more active magnetic bearings for magnetically supporting a rotor for rotation about a rotation axis in a contact-less manner;
one or more touchdown bearings for supporting said rotor when said magnetic bearings are unable to support said rotor;
a position determining device such as sensors or other means for determining a momentary rotor position;
a control device for receiving rotor position signals from the position determining device and for determining bearing control signals; and
an amplifier device for receiving said bearing control signals and for driving said active magnetic bearings according to the bearing control signals.
The control device is then a control device as laid down above.

The invention may be implemented in analog or digital hardware or in software adapted to be executed on standard hardware such as a digital signal processor (DSP). In this connection, the invention also contemplates a computer program product comprising computer program code means for controlling one or more processors of a computer such that the computer executes a method as laid down above.

### Brief description of the drawings

The invention will be described in more detail in connection with an exemplary embodiment illustrated in the drawings, in which
- Fig. 1: is a perspective view of a magnetic bearing device, partly in a sectional view, illustrating the principal setup of such a device;
- Fig. 2: is a schematic block diagram illustrating closed-loop control of a magnetic bearing device;
- Fig. 3: is a schematic diagram illustrating rotor dynamics in a touchdown situation;
- Fig. 4: is a block diagram illustrating the setup of a control device according to the present invention and the corresponding method; and
- Fig. 5: is a diagram illustrating a preferred relationship between the magnitude of the vector cross product of local center-of-mass displacement and velocity (horizontal axis) and the weighting factor (vertical axis).

### Detailed description of the invention

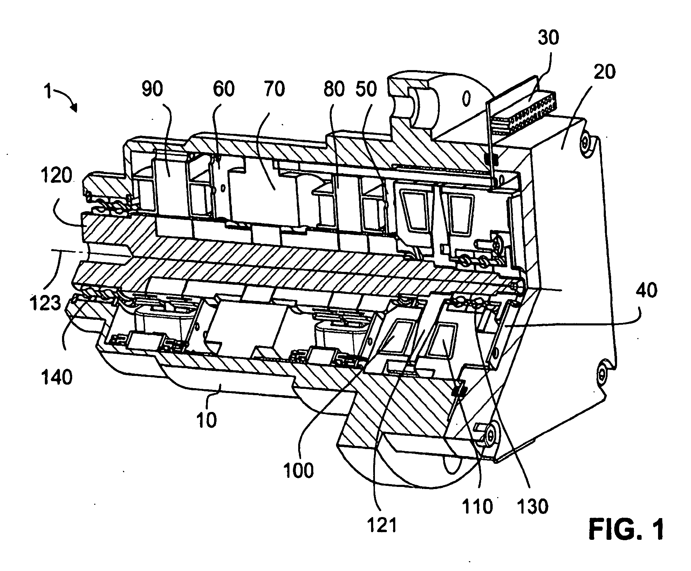

Fig. 1 shows a magnetic bearing device that is suitable, e.g., for supporting the rotor blades of a turbomolecular pump (TMP). A rotor shaft 120 is supported magnetically for rotation around a rotation axis 123. To this end, a number of magnetic bearings are provided in a housing 10 closed off by a cap 20. A pair of axial or thrust bearings 100, 110 interact with a thrust disk 121 mounted on the rotor shaft 120 and stabilize the position of the shaft against translational displacements in the axial direction. A first radial bearing 80 and a second radial bearing 90 stabilize the positions of those shaft portions which are close to these bearings against radial displacements, thereby achieving stabilization against translational displacements of the shaft in the radial directions and of tilt displacements around the radial directions. A motor 70 drives the rotation of the shaft. Touchdown or backup bearings 130, 140, implemented as dual ball bearings, support the shaft in case that the magnetic bearings are switched off or fail to fully support the rotor for any other reason. Other types of backup bearings may be used, e.g. single ball bearings or sliding bearings.

Several sensor units are provided for detecting the position of the shaft. An axial position sensor is formed on a first sensor board 40, while first and second radial position sensors are formed on further sensor boards 50 and 60, respectively. These sensors detect the axial and radial positions of the shaft in predetermined locations. In particular, the first radial position sensors detect the radial position of a shaft portion in a first sensor plane perpendicular to the rotation axis 123, while the second radial position sensors detect the radial position of another shaft portion in a second sensor plane. In this specific example, the sensors are implemented as described in WO-A 2004/048883. However, other types of position sensors may be used. Suitable sensors, in particular, eddy-current sensors, are well known in the art. It is also known and possible to avoid the use of position sensors altogether and to derive position information instead from measurements of other quantities, e.g., magnetic flux (sensorless design).

The signals from the sensors are fed to a control device (not shown in Fig. 1) which is disposed outside of the housing 10 and which may be connected to the device of Fig. 1 via a connector 30. In the control device, appropriate control signals for the magnetic bearings are derived from the sensor signals and are fed to amplifiers (not shown in Fig. 1) which in turn drive the magnetic bearings.

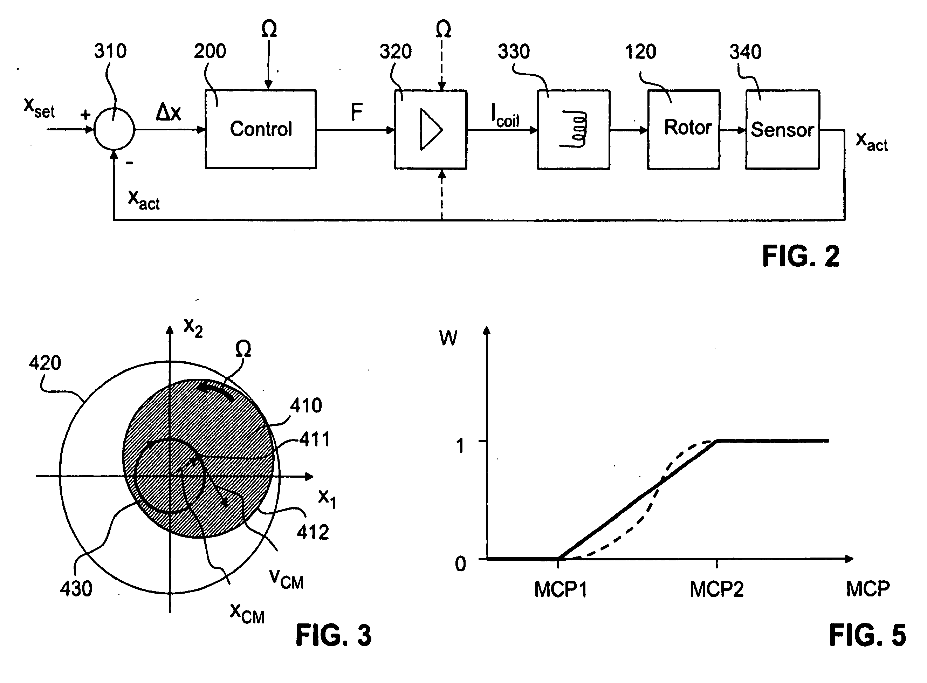

The block diagram of Fig. 2 illustrates how closed loop control of the magnetic bearing device is achieved. Sensors 340 determine a multi-dimensional position vector x_{act} representing the actual momentary position of the rotor shaft 120 in one, two or more directions and one, two or more sensor planes. By the way of example, the position vector x_{act} may have two components representing the radial position of a rotor shaft portion along two mutually orthogonal directions x₁ and x₂ in a first sensor plane, two such components in a second sensor plane, and one component representing axial position. Any type of sensor may be used. Alternatively, rotor position may be determined indirectly as described above. The actual position vector is subtracted from a desired multidimensional position vector xₛₑₜ in a subtractor 310 to yield a position error vector Δx. If the sensors directly determine position error (displacement) from the desired center position instead of position relative to an arbitrary zero position, this subtraction may be omitted altogether. The position error vector is fed to a control device 200, which will also receive other rotor characteristics such as the momentary rotation frequency or angular velocity Ω. The control device determines a vector F of forces that, when acting on the rotor, are expected to reduce the position error to zero. This force vector is fed to amplifiers 320 which act to drive magnetic bearings 330 so as to generate the forces of force vector F. The amplifiers 320 may use feedback information on position x_{act} and or on angular velocity Ω in order to achieve precise force control. Instead of such force control, it is also conceivable that the control device 200 determines, e.g., a flux vector representing desired flux in the stators or gaps of the magnetic bearings (flux control), or that the control device directly determines a voltage or current vector representing the desired voltage or current in the coils of the magnetic bearings (current/voltage control). In brief, control device 200 acts to receive rotor position signals in the form of position error vector Δx and to provide magnetic bearing control signals in the form of a force vector F (or a flux/current/voltage vector) for controlling the magnetic bearings.

Figure 3 illustrates in a highly schematic manner what happens in case of a touchdown. This figure illustrates in a highly schematic manner a cross section through a touchdown bearing 420 and a rotor shaft portion 410 in the plane of the touchdown bearing. Rotor shaft portion 410, rotating about its center of mass at angular velocity Ω, is radially displaced from its centered position by a local center-of-mass displacement vector x_{CM} to such an extent that its peripheral surface 412 touches the touchdown bearing 420. Therefore, the peripheral surface cannot move freely any more, but experiences strong decelerating forces which, in turn, cause an acceleration of the center of mass in a tangential direction. As the rotor essentially represents a spinning top, additional gyroscopic forces will be active. The decelerating forces arising from contact with the touchdown bearing, any unbalance forces and the gyroscopic forces will eventually cooperate to force the rotor shaft into a "whirling" motion in which the local center of mass in the plane of the touchdown bearing moves on an essentially circular locus 430 with opposite sense to the rotation of the rotor ("backward whirl") or, in some cases, in the same sense ("forward whirl"), depending on the exact circumstances. In a pure whirling motion, the local center of mass of the rotor in the plane of the touchdown bearing moves on a circle whose radius is the magnitude of the displacement vector x_{CM}, with a whirl velocity v_{CM} whose magnitude is the product of the magnitudes of the whirl angular velocity and the displacement vector x_{CM} and whose direction is within the same plane, but perpendicular to the displacement vector. In reality, this whirling motion may be overlaid by other types of motion. In particular, any rotor unbalance superimposes another circular movement, but the displacement vector x_{CM} remains essentially perpendicular to the velocity vector v_{CM}.

As is apparent from Fig. 3, a good measure of the degree of whirl of the rotor in a particular touchdown bearing is the cross product (vector product) of the three-dimensional, Euclidean vectors x_{CM} and v_{CM} taken in a predetermined plane through the touchdown bearing or close to it. The magnitude of the cross product corresponds to the area spanned by the two vectors x_{CM} and v_{CM}. It will be at a maximum for a pure whirling motion (vectors x_{CM} and v_{CM} are perpendicular) and zero for a pure radial oscillation (vectors x_{CM} and v_{CM} are parallel or anti-parallel). The cross product may therefore be used as an indicator of the presence of a whirling motion, its magnitude as a measure of the amount of whirl in a particular touchdown bearing, and its sign as an indicator of forward or backward whirl.

With control schemes that have traditionally been used in the art, it is not possible to efficiently control the rotor once it has entered a whirling mode. Traditionally, the controller receives at its input local radial rotor displacement signals in two different sensor planes and axial displacement signals. It then calculates from these displacement signals the overall, purely translational center-of-mass displacement of the shaft in three mutually orthogonal directions (normally called x, y, and z) and the tilt angles of the shaft relative to the rotation axis along the x and y directions. Traditionally, each of the three translational degrees of freedom and the two tilting degrees of freedom is then controlled separately by an individual controller module. The outputs of these units are finally transformed into the local coordinates of the magnetic bearings to generate driving signals for each actuator coil of the magnetic bearings.

While several improvements to this basic control scheme, such as the introduction of cross-couplings, have been proposed in the art, none of these control schemes is capable of properly taking into account the very specific rotor dynamics in case of a touchdown. In brief, such a controller would basically try to lift off the rotor from the touchdown bearings by applying a (radial) force directed opposite to the displacement vector x_{CM}. However, such a force will normally neither be appropriate nor sufficient to achieve the desired lift-off since usually the radial forces that are necessary to lift the rotor off the touchdown bearings are much higher than the available magnetic forces. If lift-off is nevertheless achieved, often rapid and hardly controllable erratic oscillations of the rotor shaft within the touchdown bearing will result. Even with traditional schemes that employ cross-couplings between the x and y directions, appropriate control cannot be achieved.

A more promising strategy is therefore to apply a force that will effectively damp and eventually stop the whirling motion. In essence, a whirl damping force is desirable which is substantially anti-parallel to the local center-of-mass velocity of the respective rotor portion, i.e., a force that is perpendicular both to the momentary local center-of-mass displacement vector x_{CM} and to the rotation axis. Such a force is most easily computed in a local coordinate system of the touchdown bearings: The required force will have the opposite direction as the local center-of-mass velocity of the corresponding rotor portion in such a coordinate system. Its magnitude can be determined by employing any known control scheme, including pure proportional (P), time-integral (I) or differential (D) control or combinations thereof (PI, PD or PID), dead beat control, or sliding mode control that gives maximum available damping force for whirl motions. In a simple, but efficient control scheme, the direction of the momentary velocity vector or of its tangential/circumferential component is determined, and the maximum possible force in the opposite direction is determined, e.g., by employing a lookup table with appropriate force values. In a specific embodiment, a lookup table with, e.g., eight times four entries may be used for each touchdown bearing, wherein the circle is divided into eight sectors, and wherein four particular force values are stored for each sector, these force values representing desired forces if the local center-of-mass velocity is in that particular sector. The force so determined is then transformed into the local coordinate system of the radial magnetic bearings to yield required force values for each actuator in the bearings.

It is beneficial to employ a separate "impact recovery" controller module for determining the appropriate whirl damping/stopping force, in addition to the main or basic controller module that is appropriate for controlling the rotor in normal operation, and to combine the output signals of both controllers in a weighted manner. Generally, the "impact recovery" controller alone will not be able to achieve and maintain stable levitation, but will merely act to reduce (and ultimately stop) the whirling motion of the rotor to such an extent that the basic controller module can again fulfill its duties and take over control. In this sense, both controllers cooperate to achieve full recovery from a touchdown situation. Therefore, a (switched or continuous) crossover between the two controllers will generally be necessary.

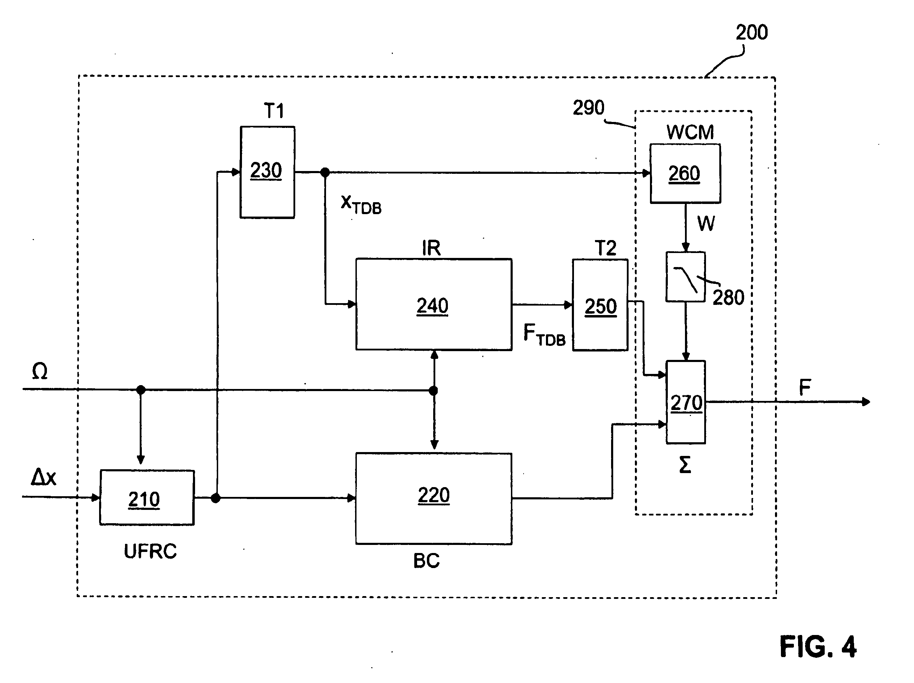

A block diagram of a preferred embodiment of a control device implementing these ideas is shown in Fig. 4. Displacement or position error signals Δx are first fed to an unbalance compensating module 210 that suppresses rotor-synchronous signals which are characteristic of unbalance and whose presence would impede basic as well as impact recovery control. Many different unbalance suppression schemes are known in the art, including the use of notch or tracking filters which filter out synchronous disturbances at the rotation frequency, as disclosed, e.g., in US-B 4,697,128. While any suitable scheme for unbalance compensation may be employed, preferably a self-adaptive scheme such as that disclosed in R. Herzog et al., loc. cit., is employed. This scheme will in the following be called UFRC or "Unbalance Force Rejection Control".

The thus unbalance-compensated displacement signals are fed to a first controller module 220 acting as a basic controller BC for controlling rotor position in normal operation. This can be any known controller, including traditional controllers as described above with or without cross couplings, or a more advanced kind of controller such as the "forward/backward" controller described in WO-A 2006/010285 that takes the gyroscopic nature of the rotor explicitly into account.

Preferably, however, the controller is a MIMO (multiple-in, multiple-out) controller optimized for rotor position control under normal operating conditions. Such an optimized MIMO controller will automatically be adapted to take gyroscopic rotor dynamics in normal operation into account. At its output, the basic controller provides a force vector to be generated by the magnetic bearings, expressed in a local coordinate system of the magnetic bearings.

In addition, the compensated displacement signals are also fed to a transformation module 230 that performs a coordinate transformation (similarity transform) T1 of the displacement signals from a local coordinate system of the sensors to a local coordinate system of the touchdown bearings. At the output of this transformation module, signals x_{TDB} are provided which are characteristic of the local center-of-mass displacement vectors of the rotor portion in two planes containing the first and second touchdown bearings, in the following called the "TDB planes".

These signals are fed to a second controller module 240 acting as an impact recovery (IR) module. In this module, the temporal change of the displacement vector in each TDB plane is monitored, and the local center-of-mass velocity of the corresponding rotor portion in each plane is calculated. The component of this vector that is perpendicular to the displacement vector is determined. Then a known control scheme such as dead beat control is applied in each TDB plane to derive an output force vector for each TDB plane acting to minimize this specific whirl velocity component for each TDB plane. In this manner, the second controller module is specifically adapted to provide bearing control signals for controlling the rotor position in a touchdown situation, taking into account the specific rotor dynamics in such a situation.

This output force vector is then fed to a second transformation module 250 that performs a coordinate transformation T2 of the force vector from the local coordinate system of the touchdown bearings into the local coordinate system of the magnetic bearings. In this manner, the output vectors of the basic controller 220 and of the second transformation unit 250 are expressed in the same coordinate system.

These vectors are summed (Σ) in a weighted manner in the weighted summing module 270 to yield an overall output force vector F. The output vector of the second transformation unit 250 is weighted with a weight W, while the output vector of the basic controller 220 is weighted with a weight (1-W).

The weight is determined in a weight computing module ("WCM") 260. The weight is a "whirl index" in one of the touchdown bearings, such as the (appropriately scaled) cross product discussed above, or a quantity directly derived from the cross products in the two touchdown bearings, e.g. the average of their magnitudes, the maximum of the two magnitudes, or a power or other function of one of these quantities. It is also possible to provide individual impact recovery modules for each of the touchdown bearings and to transform and weight the signals from these modules separately.

In a preferred embodiment, the whirl index for each touchdown bearing is a continuous function of the magnitude of the cross product as illustrated in Fig. 5. The whirl index W takes a value of zero if the magnitude MCP of the cross product is smaller than a predetermined threshold MCP1 and a value of one if the magnitude exceeds a predetermined maximum MCP2. In the first situation, only the basic controller module is active, while in the second situation, only the impact recovery module is active. Between the threshold and maximum values, the whirl index W rises from zero to one, e.g., in a linear manner (solid line) or in some other interpolating manner (broken line).

The whirl index W is subjected to low-pass filtering in a low-pass filter module 280 in order to avoid rapid changes in control characteristics due to spurious effects which might lead to a large whirl index on a very short timescale while not indicating a touchdown situation.

In brief, the weight computing module 260, the low-pass filter module 280 and the weighted summing module 270 together form a weighting module for determining a weighting factor that is an indicator of a touchdown situation (here: an indicator of whirling motion) and for providing a weighted sum of the output signals of two different controlling modules according to the weighting factor.

As the computation of the cross product for determining the whirl index is advantageously performed in a local coordinate system of the touchdown bearings, the weight computing module 260 advantageously receives the transformed displacement signals from the output of transforming module 230. It is also conceivable that the weight computing unit receives information about the local center-of-mass velocities from the IR module 240 in order to avoid doubling of computational efforts.

In the above-described preferred embodiment, a soft, continuous crossover is achieved by weighting the outputs of the two controller modules with a weight that changes substantially continuously in dependence on changes in rotor dynamics. While this is clearly preferred because it leads to well-behaved control characteristics, it is also conceivable to switch abruptly between the two control modules. In this case, the weighting factor is a binary function taking one of the values 0 or 1.

In the above-described preferred embodiment, the weight factor is derived from a cross product of a local displacement vector and a local velocity vector. However, other quantities are conceivable that might be good indicators of a whirling motion, as long as these quantities take into account rotor dynamics in accordance with the invention, i.e., if they do not exclusively rely on the momentary rotor position, but also on the temporal change of this position.

Further improvements can be achieved by further adapting the basic controller module 220 to the suggested impact recovery method. In particular, usually the basic controller will comprise at least a proportional (P) and differential (D) control component and also a time-integral (I) control component. In a touchdown situation, displacements will remain rather large for a relatively long period of time, which tends to saturate the output of the integrator for time-integral control ("windup"). Such saturation may lead to a situation in which the rotor, after lift-off, oscillates between two positions in which it touches the touchdown bearings. Improvements may be achieved by dynamically limiting the integrator output in the basic controller module in a manner such that the total output signal (proportional plus integral plus any other components) never exceeds the total saturation threshold given by the hardware. For large displacements, the proportional control component will be large, and integrator output will automatically be reduced, while at small displacements, the integrator has a larger output range. This kind of "anti-windup" measure is also advantageous in other situations, independent of the presently proposed impact recovery scheme.

A similar problem can arise in certain unbalance compensation schemes, which adapt themselves for rotor-synchronous components during a touchdown situation, such as the above-discussed UFRC scheme. In case of a forward whirl synchronous with rotational speed, the unbalance compensation scheme might adapt itself accidentally to the whirl since rotor-synchronous whirl movements have essentially the same characteristics as unbalance. This problem can be avoided by reducing or, preferably, disabling such self-adaptation depending on the whirl index or some other whirl-dependent weighting factor. In the UFRC scheme of the above-referenced paper by R. Herzog et al., such a disablement of UFRC update can be accomplished by setting the parameter ε (epsilon) in Fig. 2 of that paper to zero if the whirl index exceeds a certain UFRC disabling threshold.

The above-described control device was implemented as an appropriately programmed digital signal processor. The device was tested with a magnetic bearing device carrying a rotor for a turbomolecular pump at rotation frequencies up to more than 800 Hz (i.e., revolutions per second) in both vertical and horizontal orientations of the rotor. Results were achieved that were far superior to previously known impact recovery schemes. In particular, recovery from a touchdown was achieved at all rotation frequencies and even with large unbalance, while with previously known recovery schemes, no recovery was possible at frequencies above 300 Hz. Touchdowns were stimulated by either briefly interrupting the currents in the magnetic bearings (simulating bearing failure), or by exerting a brief and strong, but well-defined impulse to the housing.

From the tests it was apparent that the proposed method is not only capable of achieving rapid and efficient recovery from a touchdown situation in which the rotor has already entered a fully-fledged whirling motion ("full annular rub"), but is even capable of preventing the rotor from entering such a dynamic mode in the first place. In essence, the proposed scheme acts as an early warning system for touchdown situations and helps to avoid the consequences of such a situation on the rotor dynamics by providing an early damping and stopping of any beginning whirling motion. It is also in this sense in which the proposed system has proven to be far superior to prior-art schemes. For accomplishing this early warning functionality, it appears that the proposed continuous cross-over between the basic and impact recovery modules is essential.

While the invention has been described in connection with a preferred embodiment, it will be apparent from the foregoing description that many variations are possible. In particular, the bearing control signals determined in the controller modules have been described as force vectors. Instead, the bearing control signals may comprise magnetic flux or field signals, current signals, voltage signals and the like. Instead of sensors, any other known means for determining rotor position may be employed. It is to be understood that the control device may comprise additional components in addition to those described above, and that the magnetic bearing device may be set up differently than the device shown in Fig. 1. In particular, instead of four magnetic actuators per radial bearing, any other numbers such as three or six are possible. It is also possible to use other bearing configurations, in particular, axially and radially coupled configurations such as so-called conical bearings.

### List of reference signs

- 1: magnetic bearing device
- 10: housing
- 20: cap
- 30: connector
- 40: first sensor board
- 50: second sensor board
- 60: third sensor board
- 70: motor
- 80: first radial bearing
- 90: second radial bearing
- 100: first axial bearing
- 110: second axial bearing
- 120: rotor
- 121: thrust disk
- 123: rotation axis
- 130: first touchdown bearing
- 140: second touchdown bearing
- 200: control device
- 210: unbalance compensating module
- 220: first controller module
- 230: first transforming module
- 240: second controller module
- 250: second transforming module
- 260: weight computing module
- 270: weighted summing module
- 280: low-pass filter
- 290: weighting module
- 310: subtractor
- 320: amplifier
- 330: magnetic bearing
- 340: position sensor
- 410: rotor shaft
- 411: local center of mass
- 412: peripheral surface
- 420: touchdown bearing
- 430: locus of center-of-mass motion
- xₛₑₜ: desired position
- x_{act}: measured position
- Δx: position error
- F: force
- I_{coil}: coil current
- Ω: angular frequency of rotation
- x_{CM}: center-of-mass position
- v_{CM}: center-of-mass velocity
- x₁, x₂: coordinate axes
- UFRC: unbalance force rejection control
- BC: basic control
- IR: impact recovery
- T1, T2: transformation
- TDB: touchdown bearing
- x_{TDB}: position in TDB coordinates
- F_{TDB}: force in TDB coordinates
- Σ: weighted summing unit
- W: weighting factor/whirl index
- WCM: weight computing module
- MCP: magnitude of cross product
- MCP1: threshold
- MCP2: maximum

## Claims

1. A control device (200) for controlling the position of a rotor (120) in a magnetic bearing device, said magnetic bearing device comprising one or more active magnetic bearings (80, 90, 100, 110) for magnetically supporting the rotor for rotation about a rotation axis in a contact-less manner and one or more touchdown bearings (130, 140) for supporting said rotor when said magnetic bearings are unable to support said rotor, the control device being adapted to receive rotor position signals (Δx) and to provide bearing control signals (F) for controlling the magnetic bearings, the control device comprising
- a first controller module (220) specifically adapted to control the rotor in a standard situation in which said rotor rotates while not touching said touchdown bearings;
- a second controller module (240) specifically adapted to control the rotor for recovery from a touchdown situation in which said rotor rotates while touching at least one of said touchdown bearings (130, 140), the second controller module (240) being adapted to influence the rotor in a manner to allow the first controller module (220) to re-achieve stable control after a touchdown, wherein said second controller module (240) is specifically adapted to damp a whirling motion of said rotor in said touchdown bearings; and
- a weighting module (290) for determining at least one weighting factor (W), said weighting factor being an indicator of a touchdown situation of the rotor, and for combining output signals of said first and second controller modules (220, 240) in a weighted manner according to said weighting factor,
**characterized in that** said weighting factor (W) is a measure for a whirling motion of the rotor and **in that** said weighting module (290) is adapted to calculate said weighting factor (W) from a momentary rotor position and from a temporal change of said momentary rotor position.

2. The control device according to claim 1, wherein said weighting module (290) is adapted to calculate said weighting factor (W) from a vector cross product of a local center-of-mass position vector (x_{CM}) and a local center-of-mass velocity vector (y_{CM}) of a rotor portion in or near the touchdown bearings (130, 140).

3. The control device according to one of the preceding claims, wherein said weighting factor (W) is a substantially continuous variable such that said weighting module is operable to achieve a substantially continuous crossover between said first and second controller modules (220, 240).

4. The control device according to one of the preceding claims, wherein said weighting module (290) comprises a low-pass filter (280) for said weighting factor (W).

5. The control device according to one of the preceding claims, comprising a first transformation module (230) adapted to receive said rotor position signals in a predetermined coordinate system and to provide transformed rotor position signals (x_{TDB}), said transformed rotor position signals reflecting the rotor position in a local coordinate system of said touchdown bearings, and wherein said second controller module (240) is operatively connected to said first transformation module (230) for receiving the transformed rotor position signals (x_{TDB}).

6. The control device according to claim 5, comprising a second transformation module (250) adapted to receive bearing control signals (F_{TDB}) from said second control module (240), said bearing control signals being expressed in a local coordinate system of the touchdown bearings, and to provide transformed bearing control signals, said transformed bearing control signals being expressed in a local coordinate system of said active magnetic bearings (80, 90, 100, 110).

7. The control device according to one of the preceding claims, comprising an unbalance compensation module (210) adapted to receive input position signals, said input position signals being uncompensated for unbalance, and to provide compensated position signals in which signal components arising from rotor unbalance have been compensated, and wherein at least said second controller module (240) is operatively connected to the unbalance compensation module to receive said compensated position signals or signals based on said compensated position signals as its input signals.

8. The control device according to claim 7, wherein said unbalance compensation module (210) is adapted to perform, in said standard situation, a self-adaptation to input signals indicating unbalance, and to reduce or interrupt self-adaptation in said touchdown situation.

9. A magnetic bearing device comprising
- one or more active magnetic bearings (80, 90, 100, 110) for magnetically supporting a rotor (120) for rotation about a rotation axis in a contact-less manner;
- one or more touchdown bearings (130, 140) for supporting said rotor when said magnetic bearings are unable to support said rotor;
- a position determining device (40, 50, 60) for determining a momentary rotor position;
- a control device (200) for receiving rotor position signals from said position determining device and for determining bearing control signals; and
- an amplifier device (320) for receiving said bearing control signals and for driving said active magnetic bearings according to the bearing control signals;
**characterized in that** the control device (200) is a control device according to one of the preceding claims.

10. A method of controlling the position of a rotor (120) in a magnetic bearing device, said magnetic bearing device comprising one or more active magnetic bearings (80, 90, 100, 110) for magnetically supporting the notor for rotation about a rotation axis in a contact-less manner and one or more touchdown bearings (130, 140) for supporting said rotor when said magnetic bearings are unable to support said rotor, the method comprising
- receiving rotor position signals (Ax) representing a momentary position of the rotor;
- based on said rotor position signals, determining first bearing control signals specifically adapted to control the rotor in a standard situation in which said rotor rotates while not touching said touchdown bearings, and determining second bearing control signals specifically adapted to control the rotor for recovery from a touchdown situation in which said rotor rotates while touching at least one of said touchdown bearings, wherein said second bearing control signals are specifically adapted to damp a whirling motion of said rotor in said touchdown bearings;
- determining a weighting factor (W) being a measure for a whirling motion of the rotor, the weighting factor (W) being calculated from a momentary rotor position and from a temporal change of said momentary rotor position;
- determining a weighted sum of said first and second bearing control signals according to said weighting factor to provide weighted bearing control signals (F);
- using said weighted bearing control signals (F) for controlling said magnetic bearings.

11. The method of claim 10, wherein said weighting factor (W) is calculated from a vector cross product of a local center-of-mass position vector (x_{CM}) and a local center-of-mass velocity vector (v_{CM}) of a rotor portion in or near the touchdown bearings.

12. The method according to claim 10 or 11, wherein said weighting factor (W) is a substantially continuous variable such that said weighted bearing control signals (F) are a substantially continuous weighted sum of said first and second bearing control signals.

13. The method according to one of claims 10 to 12, wherein said weighting factor (W) is subjected to low-pass filtering before weighting said first and second bearing control signals.

14. The method of one of claims 10 to 13, wherein said rotor position signals (Δx) are received in a predetermined coordinate system and are transformed into transformed rotor position signals (x_{TDB}) reflecting the rotor position in a local coordinate system of said touchdown bearings, and wherein said transformed rotor position signals are used for determining said second bearing control signals.

15. The method of claim 14, wherein said second bearing control signals are first determined in a local coordinate system of the touchdown bearings and are then transformed into a local coordinate system of said active magnetic bearings before being subjected to weighting.

16. The method of one of claims 10 to 15, comprising a step of compensating the position signals for rotor unbalance, wherein compensated position signals are used at least for determining said second bearing control signals.

17. The method of claim 16, wherein said step of compensating for unbalance comprises a self-adaptation of an unbalance compensation module (210) to said signal components arising from rotor unbalance, and wherein self-adaptation is reduced or interrupted in a touchdown situation.

18. A computer program product comprising computer program code means for controlling one or more processors of a computer such that the computer executes a method according to one of claims 10 to 17.

## Patentansprüche

1. Regeleinrichtung (200), um die Position eines Rotors (120) in einer Magnetlagervorrichtung zu regeln, wobei die Magnetlagervorrichtung ein oder mehrere aktive Magnetlager (80, 90, 100, 110) aufweist, um den Rotor berührungslos magnetisch für eine Rotation um eine Rotationsachse zu lagern, sowie ein oder mehrere Fanglager (130, 140) aufweist, um den Rotor zu lagern, wenn die Magnetlager nicht in der Lage sind, den Rotor zu lagern, wobei die Regeleinrichtung dazu ausgebildet ist, Rotorpositionssignale (Δx) zu empfangen und Lagerregelsignale (F) bereitzustellen, um die Magnetlager zu regeln, wobei die Regeleinrichtung aufweist:
- ein erstes Reglermodul (220), welches spezifisch dazu ausgebildet ist, den Rotor in einer Standardsituation zu regeln, in welcher der Rotor rotiert, ohne die Fanglager zu berühren;
- ein zweites Reglermodul (240), welches spezifisch dazu ausgebildet ist, den Rotor zu regeln, um ihn aus einem Fanglagerkontakt, bei dem der Rotor rotiert, während er mindestens eines der Fanglanger (130, 140) berührt, zurückzuführen, wobei das zweite Reglermodul (240) dazu ausgebildet ist, den Rotor auf eine solche Weise zu beeinflussen, dass es dem ersten Reglermodul (220) möglich ist, nach einem Fanglagerkontakt wieder eine stabile Regelung zu erzielen, wobei das zweite Reglermodul (240) spezifisch dazu ausgebildet ist, eine Wirbelbewegung des Rotors in den Fanglagern zu dämpfen; und
- ein Wichtungsmodul (290), um mindestens einen Wichtungsfaktor (W) zu bestimmen, wobei der Wichtungsfaktor einen Indikator für einen Fanglagerkontakt des Rotors darstellt, und um die Ausgangssignale der ersten und zweiten Reglermodule (220, 240) in einer gewichteten Weise gemäss dem Wichtungsfaktor zu kombinieren,
**dadurch gekennzeichnet, dass** der Wichtungsfaktor (W) ein Mass für eine Wirbelbewegung des Rotors ist, und dass das Wichtungsmodul (290) dazu ausgebildet ist, den Wichtungsfaktor (W) aus einer momentanen Rotorposition und aus einer zeitlichen Veränderung der momentanen Rotorposition zu berechnen.

2. Regeleinrichtung nach Anspruch 1, wobei das Wichtungsmodul (290) dazu ausgebildet ist, den Wichtungsfaktor (W) aus einem Vektorkreuzprodukt eines lokalen Schwerpunktpositionsvektors (x_{CM}) und einem lokalen Schwerpunktgeschwindigkeitsvektors (y_{CM}) eines im oder nahe den Fanglagern (130, 140) gelegenen Rotorbereichs zu berechnen.

3. Regeleinrichtung nach einem der vorhergehenden Ansprüche, wobei der Wichtungsfaktor (W) eine im Wesentlichen kontinuierliche Variable ist, so dass das Wichtungsmodul derart betreibbar ist, dass es eine im wesentlichen kontinuierliche Überleitung zwischen den ersten und zweiten Reglermodulen (220, 240) erzielt.

4. Regeleinrichtung nach einem der vorhergehenden Ansprüche, wobei das Wichtungsmodul (290) einen Tiefpassfilter (280) für den Wichtungsfaktor (W) aufweist.

5. Regeleinrichtung nach einem der vorhergehenden Ansprüche, aufweisend ein erstes Transformationsmodul (230), welches dazu ausgebildet ist, die Rotorpositionssignale in einem vorbestimmten Koordinatensystem zu empfangen und transformierte Rotorpositionssignale (x_{TDB}) bereitzustellen, wobei die transformierten Rotorpositionssignale die Rotorposition in einem lokalen Koordinatensystem der Fanglager widerspiegeln, und wobei das zweite Reglermodul (240) in einer Wirkverbindung mit dem ersten Transformationsmodul (230) steht, um die transformierten Rotorpositionssignale (x_{TDB}) zu empfangen.

6. Regeleinrichtung nach Anspruch 5, aufweisend ein zweites Transformationsmodul (250), welches dazu ausgebildet ist, Lagerregelsignale (F_{TDB}) vom zweiten Reglermodul (240) zu empfangen, wobei die Lagerregelsignale in einem lokalen Koordinatensystem der Fanglager ausgedrückt sind, und um transformierte Lagerregelsignale bereitzustellen, wobei die transformierten Lagerregelsignale in einem lokalen Koordinatensystem der Fanglager ausgedrückt sind, und um transformierte Lagerregelsignale bereitzustellen, wobei die transformierten Lagerregelsignale in einem lokalen Koordinatensystem der aktiven Magnetlager (80, 90, 100, 110) ausgedrückt sind.

7. Regeleinrichtung nach einem der vorhergehenden Ansprüche, aufweisend ein Unwuchtkompensationsmodul (210), welches dazu ausgebildet ist, Eingangspositionssignale zu empfangen, wobei die Eingangspositionssignale bezüglich Unwucht unkompensiert sind, und kompensierte Positionssignale bereitzustellen, in denen Signalkomponenten, die von einer Rotorunwucht herrühren, kompensiert sind, und wobei zumindest das zweite Reglermodul (240) in einer Wirkverbindung mit dem Unwuchtkompensationsmodul steht, um die kompensierten Positionssignale oder Signale, die von den kompensierten Positionssignalen abgeleitet sind, als Eingangssignale zu empfangen.

8. Regeleinrichtung nach Anspruch 7, wobei das Unwuchtkompensationsmodul (210) dazu ausgebildet ist, in der Standardsituation eine Selbstanpassung an Eingangssignale, die eine Unwucht anzeigen, durchzuführen, und die Selbstanpassung bei Fanglagerkontakt zu reduzieren oder zu unterbrechen.

9. Magnetlagervorrichtung, aufweisend:
- ein oder mehrere aktive Magnetlager (80, 90, 100, 110), um einen Rotor berührungslos magnetisch für eine Rotation um eine Rotationsachse zu lagern;
- ein oder mehrere Fanglager (130, 140), um den Rotor zu lagern, wenn die Magnetlager nicht in der Lage sind, den Rotor zu lagern;
- eine Positionsbestimmungsvorrichtung (40, 50, 60), um eine momentane Rotorposition zu bestimmen;
- eine Regeleinrichtung (200), um Rotorpositionssignale von der Positionsbestimmungsvorrichtung zu empfangen und Lagerregelsignale zu ermitteln; und
- eine Verstärkervorrichtung (320), um die Lagerregelsignale zu empfangen und die aktiven Magnetlager gemäss den Lagerregelsignalen anzusteuern;
**dadurch gekennzeichnet, dass** die Regeleinrichtung (200) eine Regeleinrichtung nach einem der vorhergehenden Ansprüche ist.

10. Verfahren zur Regelung der Position eines Rotors (120) in einer Magnetlagervorrichtung, wobei die Magnetlagervorrichtung ein oder mehrere aktive Magnetlager (80, 90, 100, 110) aufweist, um den Rotor berührungslos magnetisch zur Rotation um eine Rotationsachse zu lagern, sowie eine oder mehrere Fanglager (130, 140) aufweist, um den Rotor zu lagern, wenn die Magnetlager nicht in der Lage sind, den Rotor zu lagern, wobei das Verfahren aufweist:
- Empfangen von Rotorpositionssignalen (Δx), die eine momentane Position des Rotors darstellen;
- basierend auf diesen Rotorpositionssignalen: Ermitteln von ersten Lagerregelsignalen, die spezifisch dazu ausgebildet sind, den Rotor in einer Standardsituation zu regeln, in welcher der Rotor rotiert, während er die Fanglager nicht berührt, und Ermitteln von zweiten Lagerregelsignalen, die spezifisch dazu ausgebildet sind, den Rotor zu regeln, um ihn aus einem Fanglagerkontakt, bei dem der Rotor rotiert, während er mindestens eines der Fanglager berührt, zurückzuführen, wobei die zweiten Lagerregelsignale spezifisch dazu ausgebildet sind, eine Wirbelbewegung des Rotors in den Fanglagern zu dämpfen;
- Ermitteln eines Wichtungsfaktors (W), der ein Mass für eine Wirbelbewegung des Rotors darstellt, wobei der Wichtungsfaktor (W) aus einer momentanen Rotorposition und einer zeitlichen Änderung der momentanen Rotorposition berechnet wird;
- Ermitteln einer gewichteten Summe der ersten und zweiten Lagerregelsignale gemäss dem Wichtungsfaktor, um gewichtete Lagerregelsignale (F) bereitzustellen;
- Verwenden der gewichteten Lagerregelsignale (F), um die Magnetlager zu regeln.

11. Verfahren nach Anspruch 10, wobei der Wichtungsfaktor (W) aus einem Vektorkreuzprodukt eines lokalen Schwerpunktpositionsvektors (x_{CM}) und einem lokalen Schwerpunktsgeschwindigkeitsvektors (v_{CM}) eines Rotorbereichs, der in oder nahe den Fanglagern angeordnet ist, berechnet wird.

12. Verfahren nach Anspruch 10 oder 11, wobei der Wichtungsfaktor (W) eine im wesentlichen kontinuierliche Variable ist, so dass die gewichteten Lagerregelsignale (F) eine im Wesentlichen kontinuierliche, gewichtete Summe der ersten und zweiten Lagerregelsignale darstellen.

13. Verfahren nach einem der Ansprüche 10 bis 12, wobei der Wichtungsfaktor (W) einem Tiefpassfilter unterzogen wird, bevor die ersten und zweiten Lagerregelsignale gewichtet werden.

14. Verfahren nach einem der Ansprüche 10 bis 13, wobei die Rotorpositionssignale (Δx) in einem vorbestimmten Koordinatensystem empfangen werden und in transformierte Rotorpositionssignale (x_{TDW}), die die Rotorposition in einem lokalen Koordinatensystem der Fanglager widerspiegeln, transformiert werden, und wobei die transformierten Rotorpositionssignale verwendet werden, um die zweiten Lagerregelsignale zu ermitteln.

15. Verfahren nach Anspruch 14, wobei die zweiten Lagerregelsignale zunächst in einem lokalen Koordinatensystem der Fanglager ermittelt werden und dann in ein lokales Koordinatensystem der aktiven Magnetlager transformiert werden, bevor sie der Wichtung unterworfen werden.

16. Verfahren nach einem der Ansprüche 10 bis 15, aufweisend einen Schritt, bei dem die Positionssignale bezüglich Rotorunwucht kompensiert werden, wobei kompensierte Positionssignale zumindest bei der Ermittlung der zweiten Lagerregelsignale verwendet werden.

17. Verfahren nach Anspruch 16, wobei der Schritt der Unwuchtkompensation eine Selbstanpassung eines Unwuchtkompensationsmoduls (210) an die Signalkomponenten, die aus einer Rotorunwucht herrühren, umfasst, und wobei die Selbstanpassung bei einem Fanglagerkontakt reduziert oder unterbrochen wird.

18. Computerprogrammprodukt, welches Computerprogrammcodemittel aufweist, um einen oder mehrere Prozessoren eines Computers so anzusteuern, dass der Computer ein Verfahren nach einem der Ansprüche 10 bis 17 ausführt.

## Revendications

1. Dispositif de commande (200) pour contrôler la position d'un rotor (120) dans un dispositif de palier magnétique, ledit dispositif de palier magnétique comprenant un ou plusieurs paliers magnétiques actifs (80, 90, 100, 110) pour supporter magnétiquement le rotor pour la rotation autour d'un axe de rotation d'une manière sans contact et un ou plusieurs paliers de contact (130, 140) pour supporter ledit rotor lorsque lesdits paliers magnétiques ne sont pas capables de supporter ledit rotor, le dispositif de commande étant adapté pour recevoir des signaux de position de rotor (Ax) et pour fournir des signaux de contrôle de palier (F) afin de contrôler les paliers magnétiques, le dispositif de commande comprenant
- un premier module contrôleur (220) spécifiquement adapté pour contrôler le rotor dans une situation standard où ledit rotor tourne tout en ne touchant pas lesdits paliers de contact ;
- un deuxième module contrôleur (240) spécifiquement adapté pour contrôler le rotor pour la récupération d'une situation de toucher dans laquelle ledit rotor tourne tout en touchant au moins l'un desdits paliers de contact (130, 140), le deuxième module contrôleur (240) étant adapté pour influencer le rotor d'une manière à permettre au premier module contrôleur (220) de rétablir un contrôle stable après un toucher, dans lequel ledit deuxième module contrôleur (240) est spécifiquement adapté pour atténuer un mouvement de tourbillonnement dudit rotor dans lesdits paliers de contact ; et
- un module de pondération (290) pour déterminer au moins un facteur de pondération (W), ledit facteur de pondération étant un indicateur d'une situation de toucher du rotor, et pour combiner des signaux de sortie desdits premier et deuxième modules contrôleurs (220, 240) d'une manière pondérée selon ledit facteur de pondération,
**caractérisé en ce que** ledit facteur de pondération (W) est une mesure pour un mouvement de tourbillonnement du rotor et **en ce que** ledit module de pondération (290) est adapté pour calculer ledit facteur de pondération (W) d'après une position momentanée du rotor et d'après une variation temporelle de ladite position momentanée du rotor.

2. Dispositif de commande selon la revendication 1, dans lequel ledit module de pondération (290) est adapté pour calculer ledit facteur de pondération (W) d'après un produit vectoriel d'un vecteur de position de centre de masse local (X_{CM}) et un vecteur de vélocité de centre de masse local (Y_{CM}) d'une partie de rotor dans les paliers de contact (130, 140) ou à proximité de ceux-ci.

3. Dispositif de commande selon l'une des revendications précédentes, dans lequel ledit facteur de pondération (W) est une variable sensiblement continue de manière à ce que ledit module de pondération soit opérative afin de réaliser une jonction sensiblement continue entre lesdits premier et deuxième modules contrôleurs (220, 240).

4. Dispositif de commande selon l'une des revendications précédentes, dans lequel ledit module de pondération (290) comprend un filtre passe-bas (280) pour ledit facteur de pondération (W).

5. Dispositif de commande selon l'une des revendications précédentes, comprenant une premier module de transformation (230) adapté pour recevoir lesdits signaux de position de rotor dans un système de coordonnées prédéterminé et pour fournir des signaux de position de rotor transformés (X_{TDB}), lesdits signaux de position de rotor transformés réfléchissant la position du rotor dans un système de coordonnées locales desdits paliers de contact, et dans lequel ledit deuxième module contrôleur (240) est connecté de manière opérative audit premier module contrôleur (230) pour recevoir les signaux de position de rotor transformés X_{TDB}).

6. Dispositif de commande selon la revendication 5, comprenant un deuxième module de transformation (250) adapté pour recevoir des signaux de contrôle de palier (F_{TDB}) dudit deuxième module de contrôle (240), lesdits signaux de contrôle de palier étant exprimés dans un système de coordonnées locales des paliers de contact, et pour fournir des signaux de contrôle de palier transformés, lesdits signaux de contrôle de palier transformés étant exprimés dans un système de coordonnées locales desdits paliers magnétiques actifs (80, 90, 100, 110).

7. Dispositif de commande selon l'une des revendications précédentes, comprenant un module de compensation de déséquilibre (210) adapté pour recevoir des signaux de position d'entrée, lesdits signaux de position d'entrée n'étant pas compensés concernant un déséquilibre, et pour fournir des signaux de position compensés dans lesquels des composantes de signal provenant d'un déséquilibre de rotor ont été compensées, et dans lequel au moins ledit deuxième module contrôleur (240) est connecté de manière opérative au module de compensation de déséquilibre afin de recevoir lesdits signaux de position compensés ou signaux sur la base desdits signaux de position compensés en tant que ses signaux d'entrée.

8. Dispositif de commande selon la revendication 7, dans lequel ledit module de compensation de déséquilibre (210) est adapté pour réaliser, dans ladite situation standard, une auto-adaptation de signaux d'entrée indiquant un déséquilibre, et pour réduire ou interrompre l'auto-adaptation dans ladite situation de toucher.

9. Dispositif de palier magnétique comprenant
- un ou plusieurs paliers magnétiques actifs (80, 90, 100, 110) afin de supporter magnétiquement un rotor (120) pour la rotation autour d'un axe de rotation d'une manière sans contact ;
- un ou plusieurs paliers de contact (130, 140) pour supporter ledit rotor lorsque lesdits paliers magnétiques ne sont pas capables de supporter ledit rotor ;
- un dispositif de détermination de position (40, 50, 60) pour déterminer une position momentanée de rotor ;
- un dispositif de commande (200) pour recevoir des signaux de position de rotor dudit dispositif de détermination de position et pour déterminer des signaux de contrôle de palier ; et
- un dispositif amplificateur (320) pour recevoir lesdits signaux de contrôle de palier et pour attaquer lesdits paliers magnétiques actifs en fonction des signaux de contrôle de palier ;
**caractérisé en ce que** le dispositif de commande (200) est un dispositif de commande selon l'une des revendications précédentes.

10. Procédé de contrôle de la position d'un rotor (120) dans un dispositif de palier magnétique, ledit dispositif de palier magnétique comprenant un ou plusieurs paliers magnétiques actifs (80, 90, 100, 110) afin de supporter magnétiquement le rotor pour la rotation autour d'un axe de rotation d'une manière sans contact et un ou plusieurs paliers de contact (130, 140) pour supporter ledit rotor lorsque lesdits paliers magnétiques ne sont pas capables de supporter ledit rotor, le procédé comprenant :
- recevoir des signaux de position de rotor (Δx) représentant une position momentanée du rotor ;
- sur la base desdits signaux de position de rotor, déterminer des premiers signaux de contrôle de palier spécifiquement adaptés pour contrôler le rotor dans une situation standard dans laquelle ledit rotor tourne tout en ne touchant pas lesdits paliers de contact, et déterminer des deuxièmes signaux de contrôle de palier spécifiquement adaptés pour contrôler le rotor pour la récupération d'une situation de toucher dans laquelle ledit rotor tourne tout en touchant au moins l'un desdits paliers de contact, dans lequel lesdits deuxièmes signaux de contrôle de palier sont spécifiquement adaptés pour atténuer un mouvement de tourbillonnement dudit rotor dans lesdits paliers de contact ;
- déterminer un facteur de pondération (W) qui est une mesure pour un mouvement de tourbillonnement du rotor, le facteur de pondération (W) étant calculé d'après une position momentanée du rotor et d'après une variation temporelle de ladite position momentanée du rotor ;
- déterminer une somme pondérée desdits premiers et deuxièmes signaux de contrôle de palier en fonction dudit facteur de pondération afin de fournir des signaux de contrôle de palier (F) pondérés ;
- utiliser lesdits signaux de contrôle de palier pondérés (F) pour contrôler lesdits paliers magnétiques.

11. Procédé selon la revendication 10, dans lequel ledit facteur de pondération (W) est calculé d'après un produit vectoriel d'un vecteur de position de centre de masse local (X_{CM}) et un vecteur de vélocité de centre de masse local (V_{CM}) d'une partie de rotor dans les paliers de contact ou à proximité de ceux-ci.

12. Procédé selon les revendications 10 ou 11, dans lequel ledit facteur de pondération (W) est une variable sensiblement continue de manière à ce que lesdits signaux de contrôle de palier pondérés (F) soient une somme pondérée sensiblement en continu desdits premiers et deuxièmes signaux de contrôle de palier.

13. Procédé selon l'une des revendications 10 à 12, dans lequel ledit facteur de pondération (W) est soumis à un filtrage passe-bas avant de pondérer lesdits premiers et deuxièmes signaux de contrôle de palier.

14. Procédé selon l'une des revendications 10 à 13, dans lequel lesdits signaux de position de rotor (Δx) sont réceptionnés dans un système de coordonnées prédéterminé et sont transformés en signaux de position de rotor transformés (X_{TDB}) réfléchissant la position du rotor dans un système de coordonnées locales desdits paliers de contact, et dans lequel lesdits signaux de position de rotor transformés sont utilisés pour déterminer lesdits deuxièmes signaux de contrôle de palier.

15. Procédé selon la revendication 14, dans lequel lesdits deuxièmes signaux de contrôle de palier sont tout d'abord déterminés dans un système de coordonnées locales des paliers de contact et sont ensuite transformés en un système de coordonnées locales desdits paliers magnétiques actifs avant d'être soumis à une pondération.

16. Procédé selon l'une des revendications 10 à 15, comprenant une étape de compensation des signaux de position pour un déséquilibre de rotor, dans lequel des signaux de position compensés sont utilisés au moins pour déterminer lesdits deuxièmes signaux de contrôle de palier.

17. Procédé selon la revendication 16, dans lequel ladite étape de compensation pour déséquilibre comprend une auto-adaptation d'un module de compensation de déséquilibre (210) pour lesdites composantes de signal provenant d'un déséquilibre du rotor, et dans lequel une auto-adaptation est réduite ou interrompue en cas d'une situation de toucher.

18. Produit de programme informatique comprenant un moyen de codage de programme informatique pour contrôler un ou plusieurs processeurs d'un ordinateur de manière à ce que l'ordinateur exécute un procédé selon l'une des revendications 10 à 17.
